# FASCICULE DE BREVET EUROPEEN

(11) **EP 4 110 688 B1**
(45) Date de publication et mention de la délivrance du brevet: **01.10.2025**
(21) Numéro de dépôt: 21707326.1
(22) Date de dépôt: 27.01.2021
(51) Int. Cl.: B62D 65/16, B60R 19/24, B62D 25/08, B62D 25/16, B60R 19/18, B60R 19/00

(54) **VÉHICULE À PARE-CHOCS AVANT COUPLÉ À UNE TRAVERSE ET À DES AILES**
FAHRZEUG MIT FRONTSTOSSFÄNGER, DER MIT EINEM QUERTRÄGER UND MIT FLÜGELN GEKOPPELT IST
VEHICLE WITH FRONT BUMPER COUPLED TO A CROSS-MEMBER AND TO WINGS

(30) Priorité: 28.02.2020 FR 2002045
(43) Date de publication de la demande: 04.01.2023
(73) Titulaire: Stellantis Auto SAS, 78300 Poissy (FR)
(72) Inventeur: GAUTHIER, Damien, 78120 RAMBOUILLET (FR); LE FLOCH, Bertrand, 91140 VILLEBON SUR YVETTE (FR); MICHEL, Thierry, 78110 LE VESINET (FR)
(74) Mandataire: BCIP
(86) Numéro de dépôt international: PCT/FR2021/050147
(87) Numéro de publication internationale: WO 2021/170927

(56) Documents cités:
- EP-A1- 0 611 682
- EP-A1- 0 826 560
- DE-A1- 4 432 766
- FR-A1- 2 816 577
- FR-A1- 2 931 419
- US-A- 4 875 728

## Description

### Domaine technique de l'invention

La présente invention revendique la priorité de la demande française 2002045 déposée le 28 Février 2020.

L'invention concerne les véhicules terrestres qui comprennent une structure comportant une partie avant à laquelle sont solidarisés fixement des ailes droite et gauche et un pare-chocs (ou bouclier).

### Etat de la technique

Certains véhicules terrestres, généralement de type automobile, comprennent une structure comprenant notamment une partie avant à laquelle sont solidarisés fixement des ailes droite et gauche et un pare-chocs (ou bouclier) avant.

Actuellement, les deux ailes sont généralement solidarisées fixement à la partie avant de la structure par des vis et le pare-chocs avant est solidarisé fixement à des parties avant des deux ailes et à la partie avant de la structure par des vis.

Ces vissages nécessitent de nombreuses manipulations et opérations de la part d'au moins un technicien sur une chaîne de montage ou dans un atelier de service après-vente, notamment du fait qu'il s'avère difficile de placer en regard les trous des ailes et les trous du pare-chocs avant, permettant le vissage, du fait de l'encombrement important du pare-chocs et des variations dimensionnelles. On comprendra en effet que ce pare-chocs doit être supporté et maintenu en position à droite et à gauche, alors même qu'il n'a pas encore été solidarisé à la partie avant de la structure, ce qui s'avère fatiguant et peu ergonome. En outre, le vissage des vis liant le pare-chocs aux deux ailes s'avère difficile du fait que les vis doivent être invisibles de l'extérieur. Le document FR 2 816 577 A1 divulgue l'interface de fixation entre un pare-choc, une aile et la structure d'un véhicule automobile, et le préambule de la revendication 1.

L'invention a donc notamment pour but d'améliorer la situation.

### Présentation de l'invention

Elle propose notamment à cet effet un véhicule terrestre comprenant une structure comportant une partie avant ou arrière à laquelle sont solidarisés fixement des ailes droite et gauche et un pare-chocs (ou bouclier) également solidarisé à ces ailes.

Ce véhicule terrestre se caractérise par le fait que la partie avant ou arrière de sa structure comprend une traverse s'étendant suivant une direction transversale du véhicule de droite à gauche, et que son pare-chocs comprend une face interne munie d'au moins une pièce de couplage couplée à cette traverse.

Grâce à l'invention, une fois que les ailes ont été solidarisées fixement à la partie avant ou arrière de la structure, un technicien peut avantageusement coupler le pare-chocs à la traverse, puis se concentrer sur la seule solidarisation fixe de ce pare-chocs aux deux ailes et à la partie avant ou arrière de la structure, ce qui permet une simplification notable des opérations de montage et une amélioration notable de l'ergonomie.

Le véhicule terrestre selon l'invention peut comporter d'autres caractéristiques qui peuvent être prises séparément ou en combinaison, et notamment :
- la face interne de son pare-chocs peut être munie d'au moins deux pièces de couplage couplées à la traverse ;
- chaque pièce de couplage peut être solidarisée fixement à une partie supérieure de la face interne ;
- chaque pièce de couplage peut délimiter un logement ouvert, orienté vers le bas et propre à loger une partie de la traverse afin d'empêcher un déplacement du pare-chocs suivant une direction longitudinale du véhicule, perpendiculaire à la direction transversale ;
- chaque pièce de couplage peut s'appuyer sur une partie supérieure de la traverse ;
- ses ailes peuvent être solidarisées fixement par collage à la partie avant ou arrière de la structure.

Selon l'invention, son pare-chocs est solidarisé fixement par au moins une vis à chacune des parties avant des ailes ; la partie avant des ailes s'entendant comme la partie des ailes la plus proche du pare-chocs fixé à la partie de la structure sur laquelle sont fixées lesdites ailes.

Selon l'invention, -chaque aile comprend dans une partie supérieure de sa partie avant une trappe permettant d'accéder à cette partie avant, côté interne, pour effectuer un vissage ou un dévissage de chaque vis ;
- son pare-chocs peut comprendre une partie inférieure solidarisée fixement par au moins deux vis à la partie avant de la structure ;
- il peut être de type automobile.

### Brève description des figures

D'autres caractéristiques et avantages de l'invention apparaîtront à l'examen de la description détaillée ci-après, et du dessin annexé, sur lequel :

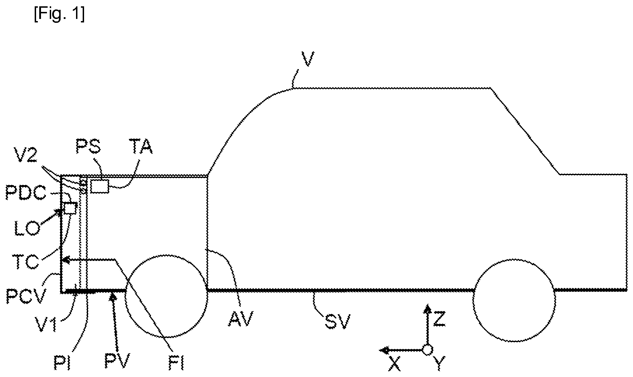

[Fig. 1] illustre schématiquement, dans une vue en coupe dans un plan XZ, un exemple de réalisation d'un véhicule terrestre selon l'invention.

### Description détaillée de l'invention

L'invention a notamment pour but de proposer un véhicule terrestre V comprenant une structure SV comportant une partie avant ou arrière PV à laquelle sont solidarisés fixement des ailes AV droite et gauche et un pare-chocs PCV dont la solidarisation aux ailes AV est notablement facilitée. Dans ce qui suit, on considère, à titre d'exemple non limitatif, que le véhicule V est de type automobile. Il s'agit par exemple d'une voiture, comme illustré non limitativement sur la figure 1. Mais l'invention n'est pas limitée à ce type de véhicule terrestre. Elle concerne en effet tout type de véhicule terrestre comprenant une structure habillée notamment par des ailes avant et un pare-chocs (ou bouclier).

Sur la figure 1 la direction X est la direction longitudinale du véhicule V, laquelle est parallèle aux côtés latéraux comportant les portières latérales, la direction Y est la direction transversale du véhicule V, laquelle est perpendiculaire à la direction X, et la direction Z est la direction verticale du véhicule V, laquelle est perpendiculaire aux directions longitudinale X et transversale Y.

On a schématiquement représenté sur la figure 1 un exemple de véhicule terrestre V selon l'invention (ici de type automobile). Ce véhicule (terrestre) V comprend une structure SV ayant une partie avant PV comportant une traverse TC et à laquelle sont solidarisés fixement des ailes AV droite et gauche et un pare-chocs PCV. Dans l'exemple de la figure 1, les ailes AV sont des ailes avant, et le pare-chocs est un pare-chocs avant PCV.

La structure SV comprend notamment le châssis et les éléments structurels participant à la délimitation de l'habitacle.

Par exemple, les ailes AV peuvent être solidarisées fixement par collage à la partie avant PV de la structure SV. Mais cette solidarisation fixe pourrait aussi se faire par vissage.

Egalement par exemple, et comme illustré non limitativement sur la figure 1, le pare-chocs avant PCV peut être solidarisé fixement par au moins deux vis V1 à la partie avant PV de la structure SV, de préférence dans une partie inférieure. Ainsi, et comme illustré non limitativement, elle peut être vissée sur une extrémité avant du châssis.

Egalement par exemple, et comme illustré non limitativement sur la figure 1, le pare-chocs avant PCV peut être solidarisé fixement par au moins une vis V2 à chacune des parties avant des ailes AV. Dans l'exemple illustré non limitativement sur la figure 1 le pare-chocs avant PCV est solidarisé fixement par deux vis V2 à chaque partie avant d'une aile AV. Mais on pourrait n'utiliser qu'une seule vis V2, ou bien on pourrait utiliser plus de deux vis V2 (par exemple trois, voire plus).

La traverse TC s'étend suivant la direction transversale Y du véhicule V de droite à gauche. On notera qu'il n'est pas obligatoire que cette traverse TC s'étende sur toute la largeur du véhicule V, c'est-à-dire de l'aile droite AV à l'aile gauche AV.

Par exemple, cette traverse TC peut être solidarisée fixement à des éléments de la structure avant s'étendant dans la direction longitudinale X du véhicule, comme par exemple des brancards avant ou des supports d'aile avant AV. Cette solidarisation peut se faire par soudage, vissage ou collage.

Par ailleurs, cette traverse TC peut être réalisée en métal (par exemple en acier ou en aluminium) ou dans une matière plastique ou composite, rigide et résistante.

Le pare-chocs avant PCV comprend une face interne FI, opposée à une face externe orientée vers l'extérieur, et munie d'au moins une pièce de couplage PDC couplée à la traverse TC.

Ainsi, lors du montage, une fois que les ailes AV ont été solidarisées fixement à la partie avant PV de la structure SV, un technicien peut avantageusement coupler le pare-chocs avant PCV à la traverse TC, puis se concentrer sur la solidarisation fixe de ce pare-chocs PCV aux deux ailes AV et à la partie avant PV de la structure SV. Il en résulte une simplification notable des opérations de montage et une amélioration notable de l'ergonomie. En outre, cela permet de renforcer la solidarisation du pare-chocs avant PCV à la structure SV.

Bien que cela n'apparaisse pas sur la figure 1, du fait qu'il s'agit d'une vue en coupe dans le plan XZ, la face interne FI du pare-chocs avant PCV est préférentiellement munie d'au moins deux pièces de couplage PDC couplées à la traverse TC. Cela permet d'améliorer le couplage, et donc le positionnement du pare-chocs PCV pendant le montage, en raison d'une répartition des points de couplage sur la largeur du véhicule V. A titre d'exemple, la face interne FI du pare-chocs avant PCV peut être munie de trois pièces de couplage PDC réparties de façon homogène suivant la direction transversale Y. En outre, cela permet d'éviter la création de contraintes dans le pare-chocs PCV par déformations.

On notera que chaque pièce de couplage PDC peut, par exemple et comme illustré non limitativement sur la figure 1, être solidarisée fixement à une partie supérieure de la face interne FI. Cela permet de faciliter le couplage à la traverse TC et d'améliorer la précision du positionnement du pare-chocs PCV par rapport aux parties avant des ailes AV.

Chaque pièce de couplage PDC peut être collée ou vissée sur la face interne FI du pare-chocs PCV. Elle peut aussi venir de matière avec le pare-chocs PCV.

On notera également, comme illustré non limitativement sur la figure 1, que chaque pièce de couplage PDC peut délimiter un logement ouvert LO, orienté vers le bas et propre à loger une partie de la traverse TC. Cela permet avantageusement d'empêcher un déplacement du pare-chocs avant PCV suivant la direction longitudinale X (perpendiculaire à la direction transversale Y). Dans ce cas, la section de chaque pièce de couplage PDC dans le plan XZ peut, par exemple, présenter une forme en C (tourné de 90°) ou en U inversé ou en L (tourné de 90°) permettant de délimiter un logement ouvert LO concave (orienté vers le bas). Dans le cas d'une section en L, chaque pièce de couplage PDC constitue une espèce de crochet (ou griffe).

On notera également, comme illustré non limitativement sur la figure 1, que chaque pièce de couplage PDC peut s'appuyer sur une partie supérieure de la traverse TC. Ainsi, le pare-chocs PCV est efficacement supporté par la traverse TC suivant la direction verticale Z.

On notera également, comme illustré non limitativement sur la figure 1, que chaque aile AV peut avantageusement comprendre dans une partie supérieure PS de sa partie avant une trappe TA qui permet, une fois qu'elle est ouverte ou retirée, d'accéder à cette partie avant, côté interne, pour effectuer un vissage ou un dévissage de chaque vis V2 assurant le couplage au pare-chocs PCV. On comprendra en effet que le passage, initialement masqué par la trappe TA, permet d'introduire une main (munie d'une visseuse) ou d'un outil de vissage côté interne afin de réaliser un vissage ou un dévissage de chaque vis V2, sans avoir besoin de passer par exemple sous le châssis. Il en résulte une simplification du vissage et une amélioration de l'ergonomie.

La figure 1 illustre le véhicule terrestre V comprenant la structure SV à l'avant. En variante non représentée, la structure du véhicule V comporte à l'arrière une partie arrière PV à laquelle sont solidarisés fixement des ailes AV droite et gauche, et un pare-chocs arrière PC également solidarisé auxdites ailes AV. La partie arrière PV de la structure SV comprend une traverse TC s'étendant suivant une direction transversale dudit véhicule V d'un côté latéral du véhicule à l'autre, et le pare-chocs PCV comprend une face interne FI munie d'au moins une pièce de couplage PDC couplée à ladite traverse TC. Dans cette variante, la partie arrière PV correspond à la partie arrière du véhicule V. Dans cette variante, la partie avant des ailes AV est considérée la partie des ailes situées à proximité du pare-chocs PCV arrière.

## Revendications

1. Véhicule terrestre (V) comprenant une structure (SV) comprenant une partie avant ou arrière (PV) à laquelle sont solidarisés fixement des ailes (AV) droite et gauche et un pare-chocs (PC) également solidarisé auxdites ailes (AV), ladite partie avant ou arrière (PV) de la structure (SV) comprenant une traverse (TC) s'étendant suivant une direction transversale dudit véhicule (V) de droite à gauche, et en ce que ledit pare-chocs (PCV) comprend une face interne (FI) munie d'au moins une pièce de couplage (PDC) couplée à ladite traverse (TC), ledit pare-chocs (PCV) étant solidarisé fixement par au moins une vis à chacune des parties avant desdites ailes (AV), **caractérisé en ce que** chaque aile (AV) comprend dans une partie supérieure de sa partie avant une trappe (TA) permettant d'accéder à cette partie avant, côté interne, pour effectuer un vissage ou un dévissage de chaque vis.

2. Véhicule selon la revendication 1, **caractérisé en ce que** ladite face interne (FI) du pare-chocs (PCV) est munie d'au moins deux pièces de couplage (PDC) couplées à ladite traverse (TC).

3. Véhicule selon la revendication 1 ou 2, **caractérisé en ce que** chaque pièce de couplage (PDC) est solidarisée fixement à une partie supérieure de ladite face interne (FI).

4. Véhicule selon l'une des revendications 1 à 3, **caractérisé en ce que** chaque pièce de couplage (PDC) délimite un logement ouvert (LO), orienté vers le bas et propre à loger une partie de ladite traverse (TC) afin d'empêcher un déplacement dudit pare-chocs (PCV) suivant une direction longitudinale dudit véhicule (V) perpendiculaire à ladite direction transversale.

5. Véhicule selon la revendication 4, **caractérisé en ce que** chaque pièce de couplage (PDC) s'appuie sur une partie supérieure de ladite traverse (TC).

6. Véhicule selon l'une des revendications 1 à 5, **caractérisé en ce que** lesdites ailes (AV) sont solidarisées fixement par collage à ladite partie avant ou arrière (PV) de la structure (SV).

7. Véhicule selon l'une des revendications 1 à 6, **caractérisé en ce que** ledit pare-chocs (PCV) comprend une partie inférieure (PI) solidarisée fixement par au moins deux vis à ladite partie avant ou arrière (PV) de la structure (SV).

8. Véhicule selon l'une des revendications 1 à 7, **caractérisé en ce qu'**il est de type automobile.

## Patentansprüche

1. Landfahrzeug (V) mit einer Struktur (SV), die einen vorderen oder hinteren Teil (PV) aufwei st, mit dem rechte und linke Flügel (AV) fest verbunden sind, und einen Stoßfänger (PC), der ebenfalls mit den Flügeln (AV) fest verbunden ist, wobei der vordere oder hintere Teil (PV) d er Struktur (SV) einen Querträger (TC) aufweist, der sich in einer Querrichtung des Fahrzeug s (V) von rechts nach links erstreckt, und wobei der Stoßfänger (PCV) eine Innenfläche (FI) a ufweist, die mit mindestens einem Kupplungsstück (PDC) versehen ist, das mit dem Querträ ger (TC) gekoppelt ist (PCV) fest mit mindestens einer Schraube an jedem der vorderen Teil e der Flügel (AV) verbunden ist, **dadurch gekennzeichnet, dass** jeder Flügel (AV) in einem ob eren Teil seines vorderen Teils eine Klappe (TA) umfasst, die den Zugang zu diesem vorder en Teil auf der Innenseite ermöglicht, um ein Einschrauben oder Abschrauben jeder Schraub e vorzunehmen.

2. Fahrzeug nach Anspruch 1, **dadurch gekennzeichnet, dass** die Innenseite (FI) des Stoßfä ngers (PCV) mit mindestens zwei Kupplungsstücken (PDC) versehen ist, die mit dem Quertr äger (TC) gekoppelt sind.

3. Fahrzeug nach Anspruch 1 oder 2, **dadurch gekennzeichnet, dass** jedes Kupplungsteil (PD C) fest mit einem oberen Teil der Innenfläche (FI) verbunden ist.

4. Fahrzeug nach einem der Ansprüche 1 bis 3, **dadurch gekennzeichnet, dass** jedes Kupplu ngsteil (PDC) ein offenes Gehäuse (LO) begrenzt, das nach unten gerichtet ist und geeignet ist, einen Teil des Querträgers (TC) aufzunehmen, um eine Verschiebung des Stoßfängers ( PCV) entlang einer Längsrichtung des Fahrzeugs (V) senkrecht zu der Querrichtung zu verhi ndern.

5. Fahrzeug nach Anspruch 4, **dadurch gekennzeichnet, dass** jedes Kupplungsteil (PDC) auf einem oberen Teil des Querträgers (TC) aufliegt.

6. Fahrzeug nach einem der Ansprüche 1 bis 5, **dadurch gekennzeichnet, dass** die Flügel (AV ) fest mit dem vorderen oder hinteren Teil (PV) der Struktur (SV) verbunden sind.

7. Fahrzeug nach einem der Ansprüche 1 bis 6, **dadurch gekennzeichnet, dass** der Stoßfäng er (PCV) einen unteren Teil (PI) umfasst, der durch mindestens zwei Schrauben fest mit dem vorderen oder hinteren Teil (PV) der Struktur (SV) verbunden ist.

8. Fahrzeug nach einem der Ansprüche 1 bis 7, **dadurch gekennzeichnet, dass** es ein Kraftfa hrzeug ist.

## Claims

1. Land vehicle (V) comprising a frame (SV) comprising a front part or rear (PV) to which right and left wings (AV) are fixedly attached and a bumper (PC) also attached to said wings (AV), said front part or rear (PV) of the frame (SV) comprising a cross-member (TC) extending along a transverse management of said vehicle (V) from right to left, and in that said bumper (PCV) comprises an inner face (FI) provided with at least one coupling component (PDC) coupled to said cross-member (TC), said bumper (PCV) being fixedly attached by at least one screw to each of the front parts of said wings (AV), wherein each wing (AV) comprises in an upper part of its front part a hatch (TA) allowing access to this front part, on the internal side, to make a screwing or unscrewing of each screw.

2. Vehicle according to claim 1, wherein said inner face (FI) of the bumper (PCV) is provided with at least two coupling components (PDC) coupled to said cross-member (TC).

3. Vehicle according to claim 1 or 2, wherein each coupling component (PDC) is fixedly attached to an upper part of said inner face (FI).

4. Vehicle according to one of Claims 1 to 3, **characterised in that** each coupling component (PDC) delimits an open housing (LO), orientated downwards and able to house a part of the said cross-member (TC) in order to prevent a displacement of the said bumper (PCV) along a longitudinal management of the said vehicle (V) perpendicular to the said transverse management.

5. Vehicle according to claim 4, wherein each coupling component (PDC) rests on an upper part of said cross-member (TC).

6. Vehicle according to one of Claims 1 to 5, **characterised in that** the said wings (AV) are fixedly attached by glueing to the said front part or rear (PV) of the structure (SV).

7. Vehicle according to one of Claims 1 to 6, **characterised in that** the said bumper (PCV) comprises a lower part (PI) fixedly attached by at least two screws to the said front part or rear (PV) of the structure (SV).

8. Vehicle according to one of Claims 1 to 7, **characterised in that** it is of the motor vehicle type.
